Europäisches Patentamt

European Patent Office

Office européen des brevets

(19)

(11) Veröffentlichungsnummer: **0 401 674**
**A2**

(12) **EUROPÄISCHE PATENTANMELDUNG**

(21) Anmeldenummer: **90110320.0**

(22) Anmeldetag: **31.05.90**

(51) Int. Cl.5: **C09K 3/10**

(30) Priorität: **09.06.89 DE 3918906**

(43) Veröffentlichungstag der Anmeldung:
**12.12.90 Patentblatt 90/50**

(84) Benannte Vertragsstaaten:
**AT BE CH DE DK ES FR GB GR IT LI LU NL SE**

(71) Anmelder: **Henkel Kommanditgesellschaft auf Aktien**
**Henkelstrasse 67**
**D-4000 Düsseldorf 13(DE)**

(72) Erfinder: **Sattler, Hans-Peter**
**Kupferberg 54**
**D-4708 Kamen(DE)**
Erfinder: **Lau, Jens-Jürgen**
**Parkstrasse 27**
**D-4750 Unna(DE)**
Erfinder: **Riemenschneider, Horst**
**Schmiedestrasse 8**
**D-4750 Unna-Hemmerde(DE)**
Erfinder: **Müller, Heinz**
**Goldregenstrasse 4**
**D-4019 Monheim(DE)**

(54) **Verwendung säurehärtender Amino-Harze als Bindemittel für Fugenfüllmassen.**

(57) Beschrieben wird die Verwendung von säurehärtenden Amino-Harzen als organische Bindemittel in mechanisch hochbelastbaren Fugenfüllmassen auf der Basis von feinteiligen mineralischen Füllstoffen wie Sand. Diese Fugenfüllmasse wird insbesondere zum Verfüllen von Fugen zwischen den im Straßenbau üblichen Pflastersteinen eingesetzt.

EP 0 401 674 A2

## Verwendung säurehärtender Amino-Harze als Bindemittel für Fugenfüllmassen

Die Erfindung betrifft die Verwendung von säurehärtenden Amino-Harzen als organische Bindemittel in mechanisch hochbelastbaren Fugenfüllmassen auf Basis feinteiliger mineralischer Füllstoffe und gewünschtenfalls weiterer Additive. Die erfindungsgemäßen Fugenfüllmassen werden insbesondere zum Verfugen von Pflastersteinen im Straßenbau eingesetzt.

Das Verfugen größerer Flächen aus künstlichen und/oder natürlichen Steinen bzw. Platten stellt spezifische Anforderungen an die Fugenfüllmasse. So sollen als Grundforderung die Zwischenräume (Fugen) zwischen den Steinen bzw. Platten möglichst dauerhaft ausgefüllt werden. Fugenfüllmassen auf Basis feinteiliger mineralischer Füllstoffe zum Verfugen horizontaler Flächen können vorteilhafterweise ein Bindemittel enthalten, während vertikale Flächen zwingenderweise ein Bindemittel enthalten müssen. Dies ist oftmals ein hydraulisch abbindender Zement, der in wäßriger Abmischung mit feinteiligen mineralischen Füllstoffen eine Fugenfüllmasse ergibt die als Mörtel bezeichnet wird. Derartige Zemente beeinträchtigen jedoch durch ihre Eigenfärbung den dekorativen Effekt der Sandstruktur einer verfüllten Fuge, was vielfach unerwünscht ist.

Beim Verfugen von Bodenflächen wie Straßenpflastern werden meistens keine Bindemittel verwendet. Üblicherweise werden Pflastersteine, z.B. aus Granit, Porphyr oder Klinker, nach gängiger Arbeitstechnik im Sand- oder Splittbett verlegt. Die anschließende Verfugung erfolgt dabei in der Regel durch das Einfegen bzw. Einschlämmen von Sanden verschiedener Kornzusammensetzung. Dieses Verfahren besitzt mehrere Nachteile, die sich daraus ergeben, daß diese Sande nicht gebunden sind und somit nur ein loses Gefüge zwischen den Steinen darstellen. Bei starker mechanischer Belastung, z.B. durch Straßenkehrmaschinen, oder hoher Wasserbelastung, z.B. durch Regengüsse, können die Sandfugen ausgewaschen bzw. ausgetragen werden. Dies kann u.U. zu einer allmählichen und unerwünschten Lockerung des Steingefüges führen insbesondere bei breiteren Pflastersteinzwischenräumen, wie sie aus optischen Gründen z.B. auf gepflasterten öffentlichen Plätzen vorzufinden sind. Weibliche Passanten mit spitzen Schuhabsätzen können mit diesen in die Sandfugen einsinken und u.U. stecken bleiben. Hieraus resultiert eine nicht unerhebliche Verletzungsgefahr. Es besteht daher, etwa seitens der Kommunen, großes Interesse an verfestigten Pflastersteinfugen.

Dem Fachmann sind mehrere Alternativen zur Herstellung verfestigter Fugen bekannt. Als Bindemittel dienen zum Beispiel Epoxydharz/Härter-Kombinationen, des weiteren anorganische Bindemittel, wie hydraulisch abbindende Zemente, sowie Bitumen. Der Einsatz von Bitumen birgt die Nachteile, daß zum einen nicht der optische Effekt einer Sandfuge erreicht wird und zum anderen, daß sich Bitumen als nicht ausreichend wärmestabil erweist, sondern an warmen Sommertagen, insbesondere bei direkter Sonneneinstrahlung, erweicht. Die wenigen Versuche, zementäre Mörtel zum Verfugen horizontaler Flächen einzusetzen scheiterten daran, daß beim Einschlämmen des Mörtels in die Fugen nicht vermieden werden kann, daß die Steine bzw. Platten ebenfalls mit einem zementären Schleier überzogen werden, welcher auf Grund seiner gräulichen Farbe keinen ästhetischen Anblick bietet und deshalb äußerst unerwünscht ist. Zur Vermeidung derartiger Grauschleier müßten zementäre Fugenfüllmassen umständlich und zeitraubend mit dem Fugeisen eingebracht werden, was unter Arbeitszeitund damit Kostengesichtspunkten wenig praktikabel ist. Verfärbungen der Fugenmasse unter Witterungsbedingung sowie eine fortschreitende Kreidung der Oberfläche sind bei epoxydharzverfestigten Fugenmörteln beobachtet worden. Hinzu kommt, daß die Verwendung von Epoxydharzen zur Fugenverfestigung aufgrund hoher Materialkosten eine äußerst unwirtschaftliche Methode darstellt.

Aufgabe der vorliegenden Erfindung war es daher, ein Bindemittel bereitzustellen, das in Abmischung mit feinteiligen mineralischen Füllstoffen und gewünschtenfalls weiteren Additiven eine Fugenfüllmasse ergibt, die besonders zum Verfüllen von Fugen zwischen Pflastersteinen geeignet ist. Insbesondere sollte dabei eine ausreichende Festigkeit gegen Wasser- und andere Witterungseinflüsse z.B. Frost sowie gegen mechanische Belastungen gegeben sein. Eine weitere Anforderung war, den optischen Effekt der gepflasterten oder verklinkerten Fläche als Ganzes sowie der Fuge im Einzelnen nicht zu beeinträchtigen. Zusätzlich sollte eine möglichst wirtschaftliche Lösung über die Auswahl geeigneter Bindemittel einerseits und durch eine einfache Anwendung, die sich nicht wesentlich von herkömmlichen Einfugungsmethoden unterscheiden soll, gefunden werden. Bei Straßenpflastern sollte die erhärtete Fugenfüllmasse gegen Belastungen resistent sein, wie sie sich z.B. aus dem Abhalten von Wochenmärkten, durch den Einsatz von Winter-Streumitteln oder durch üblichen Straßenverkehr, insbesondere durch Kfz-Betriebsstoffe, wie Öle und Kraftstoffe, ergeben. Auch sollte nicht erwünschter Pflanzenbewuchs unterdrückt werden.

Diese Aufgabenstellung wurde technisch gelöst durch die Verwendung von säurehärtenden Amino-Harzen als organische Bindemittel in mechanisch hochbelastbaren Fugenfüllmassen auf Basis feinteiliger mineralischer Füllstoffe und gewünschtenfalls weiterer Additive. Bevorzugt ist die Verwendung der Fugenfüllmasse im Straßenbau zum Verfüllen von Fugen zwischen Pflastersteinen.

Dazu kann z.B. eine wäßrige Zubereitung von Melamin/Formaldehyd-Harz als Bindemittel sowie gewünschtenfalls weitere Additive, z.B. Polyvinylalkohol als bindemittelrückhaltende Komponente und Harnstoff als Formaldehydfänger, zusammen mit Quarzsand als feinteiliger mineralischer Füllstoff unter Zugabe von verdünnter Phosphorsäure als Härter in einer Zement- oder Betonmischmaschine innig miteinander vermengt und dann ähnlich wie bei der einfachen Sandverfugung mit einem Besen in die noch unverfüllten Fugen zwischen die Pflastersteine eingekehrt bzw. eingeschlämmt werden, wo dann der Aushärteprozeß innerhalb weniger Stunden soweit voran schreitet, daß das Pflaster begehbar wird.

Unter dem Sammelbegriff Amino-Harze werden im Sinne der Erfindung Harnstoff/- und Melamin/Formaldehyd-Kondensationsharze verstanden. Diese sind der Fachwelt seit langem bekannt und finden z.B. als Bindemittel in Lacken, insbesondere Einbrennlacken, sowie in Leimharzen, z.B. zur Holzverarbeitung, Verwendung.

Harnstoff/Formaldehyd-Kondensate mit einem Mol-Verhältnis von 1 : >1 bis 1 : 3,5 ergeben über die Methylolstufe höhermolekulare Harnstoffharze. In derartigen dreidimensionalen Harzmolekülen überwiegen, auch bei höheren Molverhaltnissen von Harnstoff zu Formaldehyd, die Methylenbrücken. Endgruppen bilden die Aminogruppe des Harnstoffs oder die Methylolgruppen. Über eine teilweise Veretherung der Methylolgruppen mittels Alkoholen können die Harze modifiziert werden. Durch Weiterkondensation bis zur Aushärtung der Harze vermindern sich die Methylolgruppen. Nach Ullmann, Encyklopädie der technischen Chemie, 4. Auflage, Band 7, Verlag Chemie, Weinheim/Bergstraße 1974, Seite 406 ff., zeichnen sich die ausgehärteten Harze insbesondere durch ihre gute Lichtechtheit, ihre Schwerbrennbarkeit und durch Geruchs- und Geschmacksfreiheit aus. Durch Mitverwendung von Melamin bei der Kondensation können die Eigenschaften der Harnstoffharze sowohl im Hinblick auf die mechanischen Prüfwerte der Werkstoffe als auch hinsichtlich der Quellwerte (Wasserfestigkeit) verbessert werden.

Ähnlich wie Harnstoff, läßt sich auch Melamin mit Formaldehyd umsetzen. Die Kondensation des Melamins mit Formaldehyd im sauren pH-Bereich geht ebenfalls über die Methylolstufe, führt aber durch Polykondensation, insbesondere bei erhöhter Temperatur, rascher zu unlöslichen Produkten, als dies bei den Methylolharnstoffen der Fall ist.

Über das Verhältnis von Melamin zu Formaldehyd sowie über die Reaktionsparameter Druck, Tempe-ratur, pH-Wert und Zeit lassen sich Zusammensetzung und Vernetzungsgrad der entstehenden Kondensate - und damit auch ihre Eigenschaften - gezielt variieren. Als erfindungsgemäße Melamin/Formaldehyd-Harze werden handelsübliche Kondensationsprodukte bevorzugt, die im Mittel 2 bis 3 Moleküle Formaldehyd pro Molekül Melamin (Substitutionsgrad 2 bis 3) aufweisen.

Während die Wärmehärtung der Melamin/Formaldehyd-Harze keines besonderen Härtersystems bedarf, muß bei der Kalt-Härtung stärker sauer gearbeitet werden als bei den entsprechenden Harnstoffharzen. Ebenso wie die Harnstoffharze lassen sich die Melaminharze durch die Veretherung der Melamin-Methylolverbindungen mit Alkoholen modifizieren.

Die Melamin/Formaldehyd-Kondensations-Produkte zeichnen sich nach o.g. Ullmann durch ihre gute Temperaturbeständigkeit und vor allem durch ihre sehr gute Wasserfestigkeit aus. Zudem sind sie optisch transparent. Desweiteren weisen Melamin/- als auch Harnstoff/Formaldehyd-Harze den Vorteil auf, daß sie eine gute Lichtresistenz und Alterungsbeständigkeit besitzen. Sie sind im ausgehärteten Zustand gegen übliche organische Lösungsmittel beständig, nicht jedoch gegenüber stärkeren Säuren und Basen, wenn diese in konzentrierter Form über einen längeren Zeitraum einwirken.

Amino-Harze fanden bislang haupsächlich Verwendung als Preßmassen, Tränk- und Gießharze sowie in Leimen und Lacken. Als Bindemittel für Mineralstoffe zur Herstellung von Kunststeinen im Preßformverfahren sind Melaminharze in einer wärmehärtenden Ausführung bekannt, z.B. aus der DE 19 51 547. Hierbei wird das Harz bei hohem Druck und hohen Temperaturen in einer Form zur Aushärtung gebracht. Es handelt sich also hierbei, im Gegensatz zur vorliegenden Erfindung, nicht um eine im Außenbereich frei verarbeitbare Masse, die in der Lage wäre, bei üblichen Außentemperaturen in angemessener Zeit auszuhärten.

Besonders vorteilhaft bei der vorliegenden Erfindung ist der Umstand, daß die vorzugsweise verwendeten Amino-Harze wenigstens weitgehend in Wasser löslich und somit die Bindemittelzubereitungen bzw. die Fugenfüllmassen lösemittelfrei formulierbar sind, was aus Gründen des Arbeits- und Umweltschutzes wünschenswert ist. Aus gleichem Grund werden zur Abreaktion des Formaldehyds dem Fachmann bekannte Formaldehydfänger als Additiv verwendet, wobei vorzugsweise Harnstoff eingesetzt wird. Die Zugabe einer bindemittelrückhaltenden Komponente in der Fugenfüllmasse verhindert ein vorzeitiges Ausschwemmen oder Auswaschen des Bindemittels. Bevorzugt wird als bindemittelrückhaltende Komponente Polyvinylalkohol eingesetzt. Des weiteren können auch z.B. Stärke und/oder Cellulose sowie deren Derivate insbesondere Celluloseether als bindemittelrückhaltende Komponente verwendet werden.

Als feinteilige mineralische Füllstoffe werden Pulver, Körner, Schuppen und/ oder Splitter natürlicher Steine eingesetzt. Mineralstoffe zumindest überwiegend körniger Struktur, vorzugsweise Sande, insbesondere Quarzsande werden bevorzugt. Sanden mit einer Korngrößenobergrenze von ca. 1 mm bis 2 mm im Durchmesser wird der Vorzug gegeben. Dabei ist es von Vorteil, wenn der Sand eine möglichst ideale Sieblinie aufweist.

Als eine besonders vorteilhaft zu verwendende Bindemittelzubereitung für die vorstehend genannten Mineralstoffe erweist sich die bevorzugte Kombination von 450 Gew.-Teilen bis 550 Gew.-Teilen Amino-Harz, 80 Gew.-Teilen bis 100 Gew.-Teilen Harnstoff und 1 Gew.-Teil bis 5 Gew.-Teilen Polyvinylalkohol, Rest zu 1000 Teilen Wasser. Das Aufnehmen in Wasser kann durch Rühren erfolgen und die fertige Zubereitung mindestens 5 Tage gebrauchsfertig bleiben.

Zur Härtung der säurehärtenden Amino-Harze kommen als Härtungsmittel prinzipiell alle bekannten Protonen-Donatoren (Säuren) in Betracht. Bevorzugt werden mineralische Säuren. So führt z.B. der Einsatz von Schwefel- und/oder Salzsäure zu relativ kurzen Aushärtezeiten. Vorzugsweise wird Phosphorsäure, insbesondere in ihrer waßrig verdünnten Form, mit einem Gehalt von 15 Gew.-% bis 25 Gew.-%, eingesetzt. Jedoch können auch organische Säuren wie p-Toluolsulfonsäure zum Einsatz kommen. Unter dem Gesichtspunkt der Umweltverträglichkeit sind auch beispielsweise Essigsäure und/oder Zitronensäure verwendungsfähig.

Es wird des weiteren als Fugenfüllmasse eine Mischung von 100 bis 260 Gew.-Teilen Sand, 10 bis 40 Gew.-Teilen Bindemittelzubereitung sowie 1 bis 4 Gew.-Teilen Phosphorsäure, jeweils bezogen auf die nicht-wäßrigen Bestandteile, bevorzugt verwendet, insbesondere, wenn an Sand vorzugsweise 170 bis 230 Gew.-Teile, an Bindemittel vorzugsweise 20 bis 30 Gew.-Teile und/oder an Phosphorsäure vorzugsweise 2 bis 3 Gew.-Teile eingesetzt werden. Die Phosphorsäure ist dabei, zumindest teilweise, durch äquimolare Mengen anderer, erfindungsgemäß verwendbarer Säuren substituierbar.

Des weiteren kann die Fugenfüllmasse weitere übliche Hilfsstoffe zum Beispiel Pigmente enthalten.

Die erfindungsgemäße Fugenfüllmasse kann wie herkömmliche mörtelähnliche Fugenfüllmassen zur Verfugung vertikaler und horizontaler Flächen verwendet werden, insbesondere, wenn eine gute Fugenfestigkeit sowie ein guter dekorativer Effekt erzielt werden sollen. Bevorzugt ist die Verwendung im Strassenbau zur Verfugung von Pflastersteinen. Nach dem Härtungsprozeß liegt eine mechanisch hochbelastbare Fugenfüllmasse vor, durch die die Steine und/oder Platten haftfest miteinander verbunden sein können.

Zur Herstellung der Fugenfüllmassen werden die Mineralstoffe, die Bindemittelzubereitung sowie der Härter in den erfindungsgemäßen Mengen innig miteinander vermischt. Diese Mischoperation kann den im Baugewerbe üblichen Beton-, Zement oder Speismischmaschinen durchgeführt werden. Zum Verfugen von Straßenpflastern wird die fertige Fugenfüllmasse ähnlich wie bei der einfachen Sandverfugung z.B. durch Einschlämmen oder Einfegen mittels eines Besens, in die Fugen zwischen den Pflastersteinen eingebracht. Dabei kann es durchaus erwünscht sein, daß ein Teil der wäßrigen Phase der Fugenfüllmasse aus der nunmehr verfüllten Fuge in das darunterliegende Sandbett einsickert und auch dort verfestigend wirkt.

In einigen Fällen kann sich z.B. die Dauer der Verarbeitungsfähigkeit der erfindungsgemäßen und mit Härter versetzten Fugenfüllmasse zu kurz erweisen oder es wird gewünscht, daß die Härtung erst zu einem späteren Zeitpunkt erfolgt. Es wird dann bevorzugt, die erfindungsgemäße Fugenfüllmasse erst nach ihrer Verwendung mit dem Härter, z.B. durch Aufsprühen, zu behandeln.

Die genannten Verfahren können auch zur Neuverfugung älterer Pflasterflächen eingesetzt werden, wenn zuvor zumindest teilweise die alte Fugenfüllmasse zum Beispiel durch Auskratzen, Ausspritzen und/oder Absaugen entfernt wird.

Eine Abwandlung der technischen Lehre der Erfindung verzichtet auf das Vermengen von Bindemittelzubereitung und den feinteiligen mineralischen Füllstoffen vor dem Verfugen, sondern kennzeichnet sich durch das die Behandlung bereits sandverfugter Pflaster mit Bindemittelzubereitung und Härter in den erfindungsgemäßen Mengen. Dabei können die Bindemittelzubereitung und der Härter als Mischung oder separat nacheinander aufgetragen werden. Dieses Verfahren birgt den Vorteil, daß bei bereits sandverfugten Pflastern älteren Datums nicht zwingend die alte Fugenfüllung entfernt oder gar das Pflaster aufgerissen und unter Verwendung der erfindungsgemäßen Fugenfüllmasse neu verlegt werden muß, um ein Pflaster mit verfestigten, mechanisch hoch belastbaren Sandfugen zu erhalten, sondern in einfacher Weise, z.B. durch Sprühen, Bindemittelzübereitung und Härter nachträglich in die bereits sandverfüllten Fugen eingebracht werden können. Dabei können die so zu bearbeitenden Pflasterflächen vorbehandelt werden, indem z.B. mittels Kehrmaschinen die Fläche gereinigt wird oder durch den Einsatz von Herbiziden die Fugen von Pflanzenwuchs befreit werden. Bei der Verfestigung altverfüllter Fugen kann so vorgegangen werden, daß zunächst die Bindemittelzubereitung aufgebracht wird und das Auftragen des Härters erst dann erfolgt, wenn die Bindemittelzubereitung zum zumindest überwiegenden Teil in die Fugen eingedrungen ist.

BEISPIELE

Es wurde eine Bindemittelzubereitung aus 510 Gew.-Teilen Melaminharz, 88 Gew.-Teilen Harnstoff und 2 Gew.-Teilen Polyvinylalkohol, Rest zu 1000 Gew.-Teilen Wasser hergestellt. Um die Auflösung des Harzes zu verbessern, wurde die Mischung angerührt und blieb daraufhin ca. 25 Minuten stehen. Anschließendes 5-minütiges Aufrühren löste das Harz vollständig. Diese Mischung mit einem Festkörpergehalt von ca. 60 Gew.-% wies eine Dichte von 1,235 g/cm$^3$ und einen pH-Wert von ca. 8 auf. Die Fugenfüllmasse wurde nun in einem Mischer aus 50 Gew.-Teilen trockenem Quarzsand, mit einer Absiebung von 0,2 mm bis 1 mm, 10 Gew.-Teilen Bindemittelzubereitung und 3 Gew.-Teilen verdünnter Phosphorsäure (15 Gew.-% bzw. 20 Gew.-%) hergestellt. Die fertige Fugenfüllmasse wurde zu Prismen mit Abmessungen von 16 cm x 4 cm x 4 cm geformt. Die Versuche wurden bei Raumtemperatur durchgeführt. Es ergaben sich folgende Festigkeiten:

| 1) 15 %-ige $H_3PO_4$ als Härter | | |
|---|---|---|
| Biegezugfestigkeiten | nach 24 h | 2,6 N/mm$^2$ |
| | nach 7 d | 5,3 N/mm$^2$ |
| | nach 14 d | 5,5 N/mm$^2$ |
| Druckfestigkeiten | nach 24 h | 4,4 N/mm$^2$ |
| | nach 7 d | 11,4 N/mm$^2$ |
| | nach 14 d | 12,0 N/mm$^2$ |
| 2) 20 %-ige $H_3PO_4$ als Härter | | |
| Biegezugfestigkeiten | nach 24 h | 3,1 N/mm$^2$ |
| | nach 7 d | 5,2 N/mm$^2$ |
| | nach 14 d | 5,3 N/mm$^2$ |
| Druckfestigkeiten | nach 24 h | 6,4 N/mm$^2$ |
| | nach 7 d | 11,2 N/mm$^2$ |
| | nach 14 d | 12,9 N/mm$^2$ |
| Kugeldruckfestigkeiten | nach 14 d Trocknung ca. 40 N/mm$^2$ bis 50 N/mm$^2$ | |

Eine weitere Serie mit folgenden Zusammensetzungen von Fugenfüllmassen wurde zur Ermittlung der Biege- und Druckfestigkeiten angelegt, welche nach 7 Tagen (7 d Werte) bestimmt wurden:

| Quarz-Sand 0,2-1 mm | Bindemittelzubereitung (wie oben) | Härter ($H_3PO_4$) | Biegefestigkeit | Druckfestigkeit |
|---|---|---|---|---|
| 60 Teile | 10 Teile | 3 T 10 %ig | 3,4 N/mm$^2$ | 5,8 N/mm$^2$ |
| 50 Teile | 10 Teile | 3 T 10 %ig | 3,7 N/mm$^2$ | 8,8 N/mm$^2$ |
| 40 Teile | 10 Teile | 3 T 10 %ig | 6,2 N/mm$^2$ | 11,6 N/mm$^2$ |
| 60 Teile | 10 Teile | 3 T 20 %ig | 4,5 N/mm$^2$ | 11,2 N/mm$^2$ |
| 50 Teile | 10 Teile | 3 T 20 %ig | 4,5 N/mm$^2$ | 11,8 N/mm$^2$ |
| 40 Teile | 10 Teile | 3 T 20 %ig | 4,6 N/mm$^2$ | 12,4 N/mm$^2$ |
| 60 Teile | 10 Teile | 3 T 30 %ig | 3,1 N/mm$^2$ | 9,6 N/mm$^2$ |
| 50 Teile | 10 Teile | 3 T 30 %ig | 3,8 N/mm$^2$ | 11,6 N/mm$^2$ |
| 40 Teile | 10 Teile | 3 T 30 %ig | 4,3 N/mm$^2$ | 12,8 N/mm$^2$ |

Weiterhin wurde die Chemikalienbeständigkeit gegen einige ausgewählte Prüfmedien ermittelt. Bei wasserlöslichen Substanzen wurden jeweils 10 Gew.-%ige wäßrige Lösungen verwendet. Ethylenglycol und Ethanol wurden unverdünnt eingesetzt.

| Chemikalienbeständigkeit in der Dauerbelastung | | | |
|---|---|---|---|
| Chemikalie | nach 24 h Belastung | nach 7 d Belastung | nach 14 d Belastung |
| Schwefelsäure | sandet | sandet | brüchig |
| Ethylenglykol | k.V. | k.V. | sandet |
| Ethanol | k.V. | k.V. | k.V. |
| Essigsäure | k.V. | k.V. | k.V. |
| Super Benzin | k.V. | k.V. | k.V. |
| Milchsäure | k.V. | k.V. | k.V. |
| Öl (mineral.) | k.V. | k.V. | k.V. |
| Natronlauge | k.V. | k.V. | sandet |
| Salzsäure | sandet | sandet | brüchig |
| Testbenzin | k.V. | k.V. | k.V. |
| Zitronensäure | k.V. | k.V. | k.V. |
| Harnstoff | k.V. | k.V. | k.V. |
| Calciumchlorid | k.V. | k.V. | k.V. |
| Natriumsulfat | k.V. | k.V. | k.V. |
| Ammoniak konz. | k.V. | k.V. | k.V. |
| Streusalz | k.V. | k.V. | k.V. |
| farblich wurden keine Veränderungen festgestellt | | | |
| k.V. = keine Veränderung | | | |

Die Fugenfüllmasse ist frost- und wasserbeständig sowie weitestgehend resistent gegen übliche Öle und Kraftstoffe. Auch nach 1000 Stunden im Witterungsrad, d.h. nach mehreren hundert Zyklen der nacheinander abfolgenden Einwirkungen von Nässe, Wärme und UV-Strahlung, wiesen die Testprismen keine nennenswerte Abnutzung, Einbußen der mechanischen Belastbarkeit oder optische Beeinträchtigungen auf. Das erwünschte optische Erscheinungsbild einer Sandfuge wurde durch die Verwendung einer erfindungsgemäßen Bindemittelzubereitung nicht beeinträchtigt.

**Ansprüche**

1. Verwendung von säurehärtenden Amino-Harzen als organische Bindemittel in mechanisch hochbelastbaren Fugenfüllmassen auf Basis feinteiliger mineralischer Füllstoffe und gewünschtenfalls weiterer Additive.

2. Ausführungsform nach Anspruch 1, dadurch gekennzeichnet, daß die Fugenfüllmasse im Straßenbau zum Verfüllen von Fugen zwischen Pflastersteinen verwendet wird.

3. Ausführungsform nach Ansprüchen 1 und 2, dadurch gekennzeichnet, daß Harze verwendet werden, die vor dem Härtungsprozeß wenigstens weitgehend in Wasser löslich sind.

4. Ausführungsform nach mindestens einem der vorstehenden Ansprü che, dadurch gekennzeichnet daß als organisches Bindemittel zum zumindest überwiegenden Anteil Melamin/Formaldehyd-Harze, insbesondere mit einem mittleren Substitutionsgrad von 2 bis 3, eingesetzt werden.

5. Ausführungsform nach mindestens einem der vorstehenden Ansprüche, dadurch gekennzeichnet, daß als Additiv zum Abfangen von Formaldehyd aus den verwendeten Harzen ein Formaldehydfänger, insbesondere Harnstoff, eingesetzt wird.

6. Ausführungsform nach mindestens einem der vorstehenden Ansprüche, dadurch gekennzeichnet, daß die Fugenfüllmasse unter Zugabe einer bindemittelrückhaltenden Komponente als Additiv, vorzugsweise Polyvinylalkohol, verwendet wird.

7. Ausführungsform nach mindestens einem der vorstehenden Ansprüche, dadurch gekennzeichnet, daß feinteilige mineralische Füllstoffe mit zumindest überwiegend körniger Struktur vorzugsweise Sande, insbesondere Quarzsande, bevorzugt mit einer Korngrößenobergrenze von ca. 1 mm bis 2 mm im Durchmesser, eingesetzt werden.

8. Ausführungsform nach mindestens einem der vorstehenden Ansprüche, dadurch gekennzeichnet, daß das Bindemittel in einer Zubereitung aus 450 Gew.-Teilen bis 550 Gew.-Teilen Amino-Harz, 80 Gew.-

Teilen bis 100 Gew.-Teilen Harnstoff und 1 Gew.-Teil bis 5 Gew.-Teilen Polyvinylalkohol, Rest zu 1000 Gew.-Teilen Wasser verwendet wird.

9. Ausführungsform nach mindestens einem der vorstehenden Ansprüche, dadurch gekennzeichnet, daß als Härtungsmittel für die eingesetzten säurehärtenden Amino-Harze Protonen-Donatoren, vorzugsweise Mineralsäuren, bevorzugt Phosphorsäure, insbesondere im Konzentrationsbereich von 15 Gew.-% bis 20 Gew.-%, eingesetzt werden.

10. Ausführungsform nach mindestens einem der vorstehenden Ansprüche, dadurch gekennzeichnet, daß als Fugenfüllmasse eine Mischung folgender Komponenten:
a) Sand. 140 bis 260 Gew.-Teile, bevorzugt 170 bis 230 Gew.-Teile,
b) Bindemittelzubereitung, 10 bis 40 Gew.-Teile, bevorzugt 20 bis 30 Gew.-Teile,
c) Phosphorsäure, 1 - 4 Gew.-Teile, bevorzugt 2 - 3 Gew.-Teile, zumindest anteilsweise substituierbar durch äquimolare Mengen anderer Säuren,
jeweils bezogen auf die nicht-wäßrigen Anteile, Verwendung findet.

11. Verfahren zur Herstellung von Fugenfüllmassen - unter Verwendung von säurehärtenden Amino-Harzen nach mindestens einem der Ansprüche 1 bis 10 - und zur Verfugung von Pflastersteinen, dadurch gekennzeichnet, daß die Mineralstoffe, die Bindemittelzübereitung sowie der Härter innig miteinander vermischt und anschließend in die Fugen eingefegt oder eingeschlämmt wird.

12. Verfahren zur Herstellung von Fugenfüllmassen - unter Verwendung von säurehärtenden Amino-Harzen nach mindestens einem der Ansprüche 1 bis 9 - und zur Verfugung von Pflastersteinen, dadurch gekennzeichnet, daß die Mineralstoffe und die Bindemittelzubereitung innig miteinander vermengt und anschließend, nach dem Einfegen oder Einschlämmen in die Fugen, der Härter, vorzugsweise durch Sprühen, aufgebracht wird.

13. Verfahren zur Herstellung von Fugenfüllmassen unter Verwendung von säurehärtenden Amino-Harzen nach mindestens einem der Ansprüche 1 bis 9 - und zur Verfugung von Pflastersteinen, dadurch gekennzeichnet, daß zur Verfestigung der Pflastersteinzwischenräume bereits sandverfugter Pflaster eine wäßrige Zubereitung des Bindemittels und der Härter separat oder gemeinsam Auftrag, vorzugsweise durch Sprühen, aufgetragen werden.